# NEW EUROPEAN PATENT SPECIFICATION

(11) **EP 1 883 308 B2**
(45) Date of publication and mention of the opposition decision: **14.03.2018**
(45) Mention of the grant of the patent: 27.10.2010
(21) Application number: 05746631.0
(22) Date of filing: 16.05.2005
(51) Int. Cl.: A23C 9/142, A01J 11/04

(54) **A METHOD IN THE PROTEIN FRACTIONATION OF SKIM MILK BY MEANS OF MICROFILTRATION**
VERFAHREN BEI DER PROTEINFRAKTIONIERUNG VON MAGERMILCH MITTELS MIKROFILTRATION
PROCEDE FAISANT INTERVENIR UNE MICROFILTRATION LORS DU FRACTIONNEMENT DES PROTEINES DU LAIT ECREME

(43) Date of publication of application: 06.02.2008
(73) Proprietor: Tetra Laval Holdings & Finance S.A., 1009 Pully (CH)
(72) Inventor: BENDIXEN, Niels, DK-8250 EGÅ (DK); HANSEN, Sven, DK-8382 HINNERUP (DK); LINDAU, Jeanette, S-SE-247 36 SÖDRA SANDBY (SE)
(74) Representative: Müller Schupfner & Partner Patent- und Rechtsanwaltspartnerschaft mbB
(86) International application number: PCT/SE2005/000692
(87) International publication number: WO 2006/123972

(56) References cited:
- WO-A1-02/069724
- WO-A1-2004/110158
- US-A- 4 876 100
- US-A- 6 051 268
- US-B1- 6 372 276

## Description

### TECHNICAL FIELD

The present invention relates to a method in protein fractionation of skim milk by means of microfiltration, where the skim milk is microfiltered in one or more stages.

### BACKGROUND ART

Protein fractionation of skim milk is a process in the food industry which is intended to divide up the skim milk into casein and whey. When the skim milk is caused to pass through a microfilter of a pore size which permits protein fractionation, the casein is held back and forms retentate while the whey with the whey proteins passes through the filter and thus constitutes a permeate.

The casein from the process is often employed in cheese making where it is added to the cheese milk in order standardise or strengthen it. As a result of this process, the whey, with the valuable whey proteins, is completely pure and it constitutes the raw material for the production of protein concentrate.

The milk which enters into the dairy, the raw milk, is almost without exception separated into a cream phase and a skim milk phase. Depending on which end product the milk is to be employed for, both of these phases are treated differently in a dairy. The skim milk which is to be further refined by protein fractionation is pasteurized whereafter it is cooled down to approx. 4°C and is stored in a tank, or alternatively the skim milk may undergo protein fractionation immediately after the separation.

Before the skim milk has been microfiltered for protein fractionation, it has been common practice that the milk is heated in some form of heat exchanger to between 50 and 52°C and the milk is then kept in a holding cell for 10 to 30 minutes. This pre-treatment is necessary so as to reduce the risk of so-called fouling in the microfilter, i.e. that the filter becomes blocked and production time is lost. Among other things, fouling occurs because there is a precipitation of calcium phosphate. However, it has proved that this lengthy stay time at this temperature range has entailed an undesirable growth of harmful microorganisms.

A process for treating skin milk or whey by microfiltration to reduce bacteria and fat therein and/or recover proteins therefrom, is disclosed in US 6 051 268.

### OBJECTS OF THE INVENTION

One object of the present invention is to realise a method in protein fractionation of skim milk which does not entail a risk of microbiological growth during the pre-treatment of the skim milk.

A further object of the present invention is that the method does not contribute to a precipitation of calcium phosphate during the microfiltration.

### SOLUTION

These and other objects have been attained according to the present invention in that the method of the type described by way of introduction has been given the characterising features according to claim 1.

Preferred embodiments of the present invention have further been given the characterising features as set forth in the appended Claims.

### BRIEF DESCRIPTION OF THE ACCOMPANYING DRAWINGS

One preferred embodiment of the present invention will now be described in greater detail hereinbelow, with reference to the accompanying Drawings. In the accompanying Drawings:
Fig. 1 is a flow diagram for protein fractionation for which the method according to the present invention may be employed;
Fig. 2 shows the transmembrane pressure over a period of time for a number of filters in conventional protein fractionation; and
Fig. 3 shows the transmembrane pressure over a period of time for a number of filters in protein fractionation according to the present invention.

### DESCRIPTION OF PREFERRED EMBODIMENT

The present invention relates to a method in protein fractionation of skim milk by means of microfiltration. Skim milk constitutes the raw material for the process and this is the result of the standardisation which almost all milk entering into a dairy undergoes. The raw milk which enters into the dairy is separated into a cream phase and a skim milk phase. The skim milk from the separation is most generally pasteurized and thereafter cooled down to approx. 4°C and is stored in a tank before the protein fractionation. Alternatively, the skim milk as raw material may come directly from the separation. A further alternative is that the skim milk, after separation and pasteurization, directly undergoes protein fractionation.

When the protein fractionation is to be carried out the skim milk is led to heating equipment 1. The heating equipment 1 may consist of some form of heat exchanger, such as a plate heat exchanger or a tube heat exchanger. In the heating equipment 1, the skim milk is heated to between 55 and 65°C, or preferably to a temperature of between 60 and 65°C.

The skim milk which has attained the desired temperature passes further to a holding cell 2. Normally, the holding cell 2 consists of a pipe conduit of a predetermined length. The pipe conduit may be straight or alternatively formed into a spiral loop. Alternatively, the holding cell 2 may consist of a tank. In the holding cell 2, the skim milk is kept at the desired temperature for a period of time of between 2 and 15 minutes, or preferably between 5 and 10 minutes. It generally applies that the higher the temperature, the shorter will be the time interval required. Trials which have shown good results have been carried out at a temperature of 62°C for a period of approx. 8 minutes. The stay temperature and stay time according to the present invention, i.e. a higher temperature for a shorter time, is not as favourable for undesirable bacterial growth as prior art methods.

After the holding cell 2, the skim milk may pass through a deaerator 3 in order further to improve the preconditions for increased production time for the protein separation, since air in the milk may also cause fouling later in the process. However, trials have demonstrated that the method may also be carried out without employing a deaerator 3.

The skim milk thereafter passes a balance tank 4. The purpose of the balance tank 4 is to act as a buffer for the skim milk in the event of production disruptions and so as to obtain a uniform supply of skim milk to the protein fractionation.

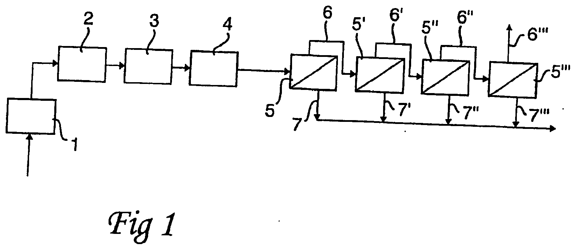

After the balance tank 4, the protein fractionation proper takes place in that the skim milk is caused to pass through than one microfilters 5. In Fig. 1, the protein fractionation takes place in four stages. The microfilter 5 is preferably manufactured from ceramics, but it may also be manufactured from glass, polymers or the like. The microfilter 5 has a mesh or pore size of 0.05-0.5 µm, preferably 0.1-0.2 µm. Preferably, all microfilters 5 have approximately the same mesh or pore size.

In the first filter 5, the skim milk is divided into a retentate 6 which does not pass through the filter 5, and a permeate 7 which is that part of the skim milk which passes through the filter 5. The retentate 6 from the first filter 5 is led further to the second filter 5' and is divided therein into a new retentate 6' and a new permeate flow 7'. The retentate 6' from the second filter 5' continues in a corresponding manner through the remaining filter units 5. The permeate 7 from all filters 5 is gathered to a common conduit.

The retentate 6 from the protein fractionation which is rich in casein may, for example, be employed as an additive to the milk which constitutes the raw material for cheese making. The permeate 7 consists of whey which contains whey proteins. As a result of the filtration, the whey is pure with the result that it is an excellent raw material for protein recovery.

The temperature of the skim milk when it departs from the holding cell is between 55 and 65°C, or preferably between 60 and 65°C. If use is made in the plant of a deaerator 3, there will be obtained a natural reduction of the temperature of a few degrees. As a result, the skim milk will be at a temperature of approx. 50 to 60°C, or preferably 55 to 60°C when it enters the first microfilter 5. If no deaerator 3 is employed in the plant, the skim milk will be at the same temperature as it has in the holding cell 2, when it enters into the first microfilter 5. For each microfilter 5, 5', 5", 5'" through which the skim milk passes it will be ensured that there is a further reduction of the temperature by a few degrees.

In order to avoid precipitation of calcium phosphate, which may rapidly block the filters 5 and reduce available production time, it is essential that the skim milk displays a falling temperature curve through the process, and that no new heating takes place. If the temperature is increased during the process, there will be an increased precipitation of calcium phosphate, since the precipitation of calcium phosphate increases with increased temperature. Blocking of the filters 5 will give a reduced production time because the pressure across the membranes of the filters 5 must be increased so as to maintain capacity. The blocking of the filters also entails that the whey proteins find it more difficult to pass through the microfilters and there will be an increased retention of the whey proteins.

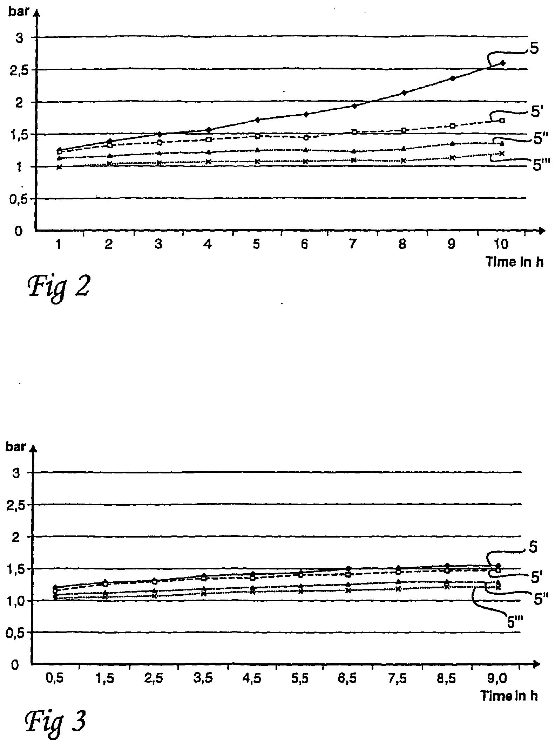

Fig. 2 shows the transmembrane pressure during a period of time for four filters 5, 5', 5", 5'" connected in series in conventional protein fractionation. The curves demonstrate how the transmembrane pressure must be increased in order to maintain capacity. For the first filter 5 which the skim milk is caused to pass there will be the greatest increase because of blocking. After approx. 10 hours' production, the pressure must be twice as high in order to maintain capacity. The pressure must also be increased for the subsequent filters 5', 5", 5'" but not by as much.

Fig. 3 shows the transmembrane pressure during a period of time for four filters 5, 5', 5", 5'" connected in series in protein fractionation according to the present invention. The curves demonstrate how the pressure must be changed when use is made of the performances which the above described trial demonstrates, i.e. the skim milk is to stay for approximately 8 minutes at a temperature of approx. 62°C and where there is a falling temperature curve during the microfiltration. As the curves in Fig. 3 show, the transmembrane pressure must be increased very moderately for all filters 5, 5', 5", 5"' and, after approximately 10 hours, there is maintained capacity at very slight pressure elevation, which implies that blocking of the filters is extremely moderate in extent.

As will have been apparent from the foregoing description, the present invention realises a method in protein fractionation by means of microfiltration which has a pre-treatment which does not run the risk of microbiological growth and where the pre-treatment, together with the falling temperature curve during the process, contribute to increased production time and an improved yield from the process.

## Claims

1. Method for the protein fractionation of skim milk by means of microfiltration, in which the skim milk is microfiltered in more than one stages, **characterised in that** the skim milk, prior to the microfiltration, is heated to between 55 and 65°C and kept at this temperature during 2 to 15 minutes, and that the skim milk, during the microfiltration, displays a falling temperature curve, and **in that** at each microfilter (5) included in the plant, the temperature is reduced by a few degrees.

2. The method as claimed in claim 1, **characterised in that** the skim milk is heated to between 60 and 65°C and kept at this temperature for between 5 and 10 minutes.

3. The method as claimed in any of the preceding claims, **characterised in that,** after the heating, the skim milk is caused to pass through a deaerator (3) in which event the temperature falls by a few degrees.

## Patentansprüche

1. Verfahren für die Proteinfraktionierung von Magermilch mithilfe von Mikrofiltration, wobei die Magermilch in mehr als einer Stufe mikrofiltriert wird, **dadurch gekennzeichnet, dass** die Magermilch vor der Mikrofiltration auf zwischen 55 und 65 °C erwärmt wird und über einen Zeitraum von 2 bis 15 Minuten bei dieser Temperatur gehalten wird, und dass die Magermilch während der Mikrofiltration eine fallende Temperaturkurve zeigt, und dass bei jedem von der Anlage umfassten Mikrofilter (5) die Temperatur um einige Grad verringert wird.

2. Verfahren gemäß Anspruch 1, **dadurch gekennzeichnet, dass** die Magermilch auf zwischen 60 und 65 °C erwärmt wird und über einen Zeitraum zwischen 5 und 10 Minuten bei dieser Temperatur gehalten wird.

3. Verfahren gemäß einem der vorstehenden Ansprüche, **dadurch gekennzeichnet, dass** die Magermilch nach dem Erwärmen durch einen Entgaser (3) geführt wird, bei welchem Vorgang die Temperatur um einige Grad fällt.

## Revendications

1. Procédé pour le fractionnement des protéines du lait écrémé par microfiltration, dans lequel le lait écrémé est microfiltré en plus d'une étapes, **caractérisé en ce que** le lait écrémé, avant la microfiltration, est chauffé à une température de 55 à 65 °C et maintenu à cette température pendant 2 à 15 minutes, et **en ce que** le lait écrémé, durant la microfiltration, présente une **en ce que**, à chaque microfiltre (5) inclus dans l'installation, la température est réduite de quelques degrés courbe de température en baisse, et **en ce que**, à chaque microfiltre (5) inclus dans l'installation, la température est réduite de quelques degrés.

2. Procédé selon la revendication 1, **caractérisé en ce que** le lait écrémé est chauffé à une température de 60 à 65 °C et maintenu à cette température pendant 5 à 10 minutes.

3. Procédé selon l'une quelconque des revendications précédentes, **caractérisé en ce que**, après le chauffage, on fait passer le lait écrémé dans un désaérateur (3), la température diminuant alors de quelques degrés.
